# EUROPEAN PATENT APPLICATION

(11) **EP 1 040 988 A2**
(43) Date of publication of application: **04.10.2000**
(21) Application number: 00302803.2
(22) Date of filing: 03.04.2000
(51) Int. Cl.: B62D 63/08

(54) **Trailers with arrangement for conductors/conduits**

(30) Priority: 01.04.1999 GB 9907498
(71) Applicant: Montracon (Refrigerated Vehicles) Ltd., York, YO4 3EW (GB)
(72) Inventor: Reynolds, Steven John, North Newbald, York YO4 3SW (GB); Peace, Gavin, Whitby, North Yorkshire YO21 2QU (GB)
(74) Representative: Wise, Stephen James

(57) **Abstract**

A trailer (1) provided with a forwardly mounted track (2) extending athwart the trailer, on which a mounting (4) is moveable; conductors and/or conduits (16) are mounted between the mounting and trailer within a constraining means (8) preferably formed as a hollow linked guide; the constraining means moves in a substantially vertical plane so that the conductors and/or conduits move in the athwart direction A parallel to the track. The arrangement ensures a saving of 50% of the room over the prior art.

## Description

The present invention relates to trailers for motor vehicles and to track/trailer combinations. The term "trailer" indicated hereafter includes a trailer of any kind including a semi-trailer.

Our British Patent Application Publication No 2,321,038 and European Patent Application Publication No 0 853 033 show two arrangements whereby conductors/conduits sometimes called "suzies" are guided between a tractor and trailer. In both arrangements - see EPA Publication No 0 853 033 - a mounting is guided transversely across the front of a trailer along a curved track. This has certain advantages when guiding the suzies such as self-centring. However, some tractor/trailer combinations have a less than normal amount of space between the tractor and trailer.

A trailer according to the invention is provided with a forwardly mounted track extending athwart the trailer, a coupling mounting mounted to and movable on the track, conductors and/or conduits mounted between the mounting and trailer such as to allow said movability, said mounting allowing articulation with a tractor and is characterised in that the conductors and/or conduits are constrained by constraining means so as to move at least adjacent the coupling mounting in the athwart direction parallel to the track and in a substantially vertical plane.

By constraining the conductors and/or conduits so as to move strictly in the athwart direction parallel to the track, it is possible to reduce the space needed for the track and the coupling mounting by about 50% as compared to the previous arrangement shown in our European Publication No 0 853 033. This enables a wider range of trailers to be fitted with a suzie guide than was previously possible.

The constraint may be achieved by constraining means formed as a linked guide where the links are interconnected about axes which are substantially parallel with the forward and rear direction of the trailer and/or at right angles to the athwart direction.

Preferably, the conductors and/or conduits are mounted within the linked guide so that not only does the guide provide the necessary restraint but it also provides protection for the conductors.

Whilst the track is preferred to be straight, for simplicity it could be slightly or shallowly 'V' shaped but lying in the athwart plane so as to induce centring.

An embodiment of the invention will be described by way of example with reference to the accompanying drawings in which:-
Figure 1 is a side elevation of a trailer according to the invention,
Figure 2 is an enlarged end elevation of the track shown in Figure 1,
Figure 3 is an enlarged side elevation of the track shown in Figures 1 and 2,
Figure 4 is an elevation of a coupling mounting as shown in Figure 2,

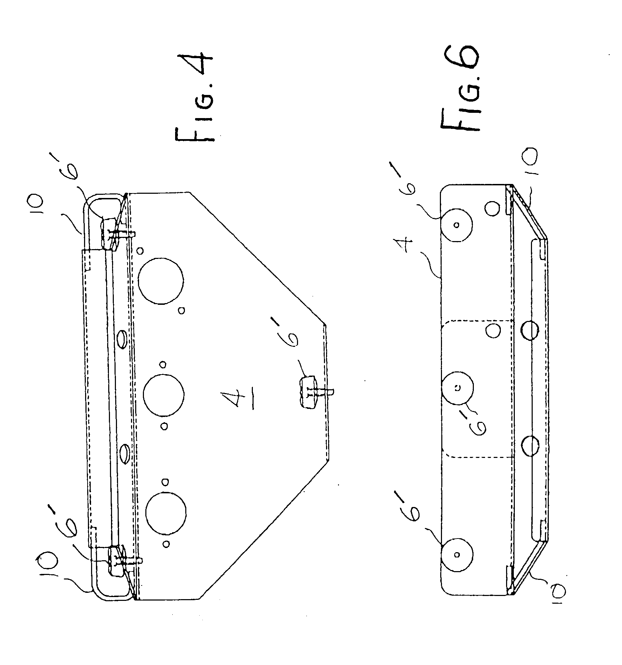

Figures 5 and 5A are cross sections of an upper part of the track of Figure 2 showing rollers supporting the mounting, that are shown in Figure 6A having modified rollers,
Figures 6 and 6A are plan views of the mounting of Figure 4.

The drawings show a trailer 1. At the front 3 of the trailer is an upper and lower track 2, 2' and a mounting 4 running by means of rollers 6 acting within the tracks.

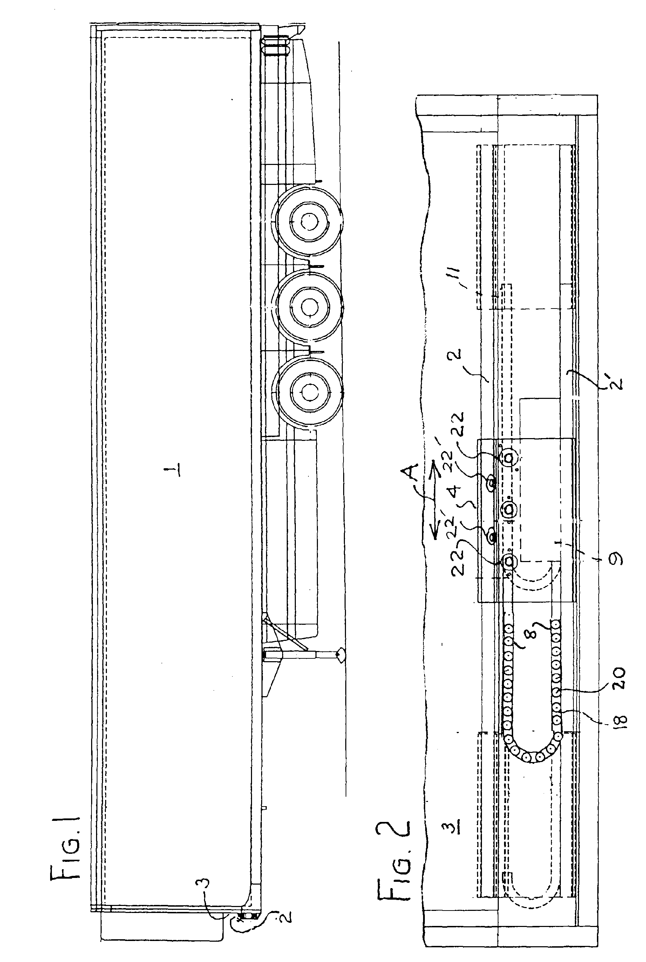

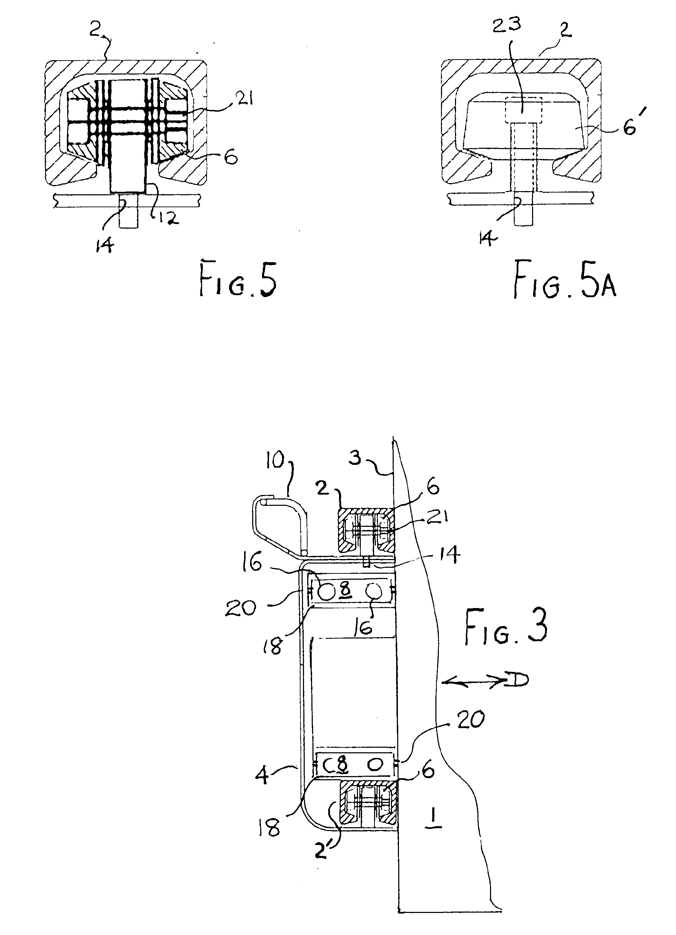

Behind the mounting is an articulated linkage 8 of the sort described in our above European Patent Publication No 0 853 033. The conductors/conduits 16 are of the type described in the aforesaid application and are contained within the linkage 8 as shown in Figure 3. The linkage 8 has links 18 which are interconnected about axes 20 which are parallel with the forward and rear direction D of the trailer and at right angles to the athwart direction A (see Figure 2).

As the mounting 4 slides from side to side, the linkage 8 pays out in a direction parallel to the preferably straight track 2 which is preferably parallel to direction A. The linkage is fixed to the lower track 2' at 9 and the mounting at 11.

Electrical couplings 22 and air couplings 22' connected to conduits 16 extend forwardly from the coupling mounting 4. These are not shown in Figure 3, for clarity, but are shown in Figure 2. The air couplings 22' connect to conduits 16 through a right-angled connection (not shown in the drawings).

Handgrips 10 at each side of the mounting 4 assist the user to manually pull the mounting 4 to one side for access. Figures 5 and 5A show the mounting of the rollers 6 and 6' in more detail. The rollers are mounted on steel bolts and thence to the mounting 4 through holes 14. Rollers 6' are made of self-lubricating nylon.

## Claims

1. A trailer (1) provided with a forwardly mounted track (2) extending athwart the trailer, a coupling mounting (4) mounted to and movable on the track, conductors and/or conduits (16) mounted between the mounting and trailer such as to allow said movability, said mounting allowing articulation with a tractor and is characterised in that the conductors and/or conduits (16) are constrained by constraining means (8) so as to move at least adjacent the coupling mounting in the athwart direction (A) parallel to the track and in a substantially vertical plane.

2. A trailer according to Claim 1 wherein the constraining means (8) is a linked guide formed from a plurality of links (18), the links being interconnected about axes (20) which are substantially parallel with the forward and rear direction (D) of the trailer and/or at right angles to the athwart direction (A).

3. A trailer as claimed in Claim 2 wherein the conductors and/or conduits are mounted within the linked guide (8).

4. A trailer as claimed in any one of Claims 1 to 3 wherein the coupling mounting is mounted to the track by means of rollers (6), each having an axis (21) in the forward and rear direction (D) of the trailer.

5. A trailer according to any one of Claims 1 to 3 wherein the coupling mounting is mounted to the track by means of rollers (6') having substantially vertical axes (23').

6. A trailer as claimed in Claim 4 or 5 wherein the rollers are made of a self-lubricating plastics material, preferably nylon.
